# FASCICULE DE BREVET EUROPEEN

(11) **EP 4 087 778 B1**
(45) Date de publication et mention de la délivrance du brevet: **03.12.2025**
(21) Numéro de dépôt: 21700205.4
(22) Date de dépôt: 08.01.2021
(51) Int. Cl.: B64C 25/26, E05B 85/04, F16C 11/04, F16C 11/06, F16C 23/04, F16C 33/10

(54) **TRAIN D'ATTERRISSAGE D'AÉRONEF ET PROCÉDÉ DE CONTRÔLE D'UNE OLIVE DANS UN TRAIN D'ATTERRISSAGE D'AÉRONEF**
FLUGZEUGFAHRWERK UND VERFAHREN ZUR STEUERUNG EINES OLIVENFÖRMIGEN FANGSTIFTS IN EINEM FLUGZEUGFAHRWERK
AIRCRAFT LANDING GEAR AND METHOD OF CONTROLLING AN OLIVE-FORM CAPTUR PIN IN AN AIRCRAFT LANDING GEAR

(30) Priorité: 10.01.2020 FR 2000217
(43) Date de publication de la demande: 16.11.2022
(73) Titulaire: Safran Landing Systems, 78140 Vélizy-Villacoublay (FR)
(72) Inventeur: DUFAY, Ludovic, 77550 MOISSY-CRAMAYEL (FR)
(74) Mandataire: Cabinet Boettcher
(86) Numéro de dépôt international: PCT/EP2021/050290
(87) Numéro de publication internationale: WO 2021/140210

(56) Documents cités:
- EP-A1- 3 517 430
- GB-A- 626 280
- KR-B1- 101 872 908
- US-A- 2 596 202

## Description

L'invention concerne un train d'atterrissage d'aéronef, ainsi qu'un procédé de contrôle d'une olive dans un train d'atterrissage d'aéronef.

### ARRIERE PLAN DE L'INVENTION

Les aéronefs comportent un certain nombre d'éléments mobiles entre une position déployée et une position rentrée, tels que des atterrisseurs, des portes, des extrémités de voilures. Ces éléments mobiles sont munis d'une olive adaptée, pour au moins l'une des positions précitées, à être crochetée par un crochet de verrouillage porté par la structure de l'aéronef pour immobiliser les éléments mobiles en position.

L'olive se présente généralement sous la forme d'un corps de révolution présentant un orifice axial pour pouvoir être reçue librement tournante sur une broche portée par l'élément mobile, de sorte qu'elle puisse rouler sur le crochet lors de l'accostage ou lors de la libération. Cependant, il a été constaté des cas de grippage de l'olive sur la broche, générant un frottement entre l'olive et le crochet lors de la manœuvre de ce dernier, rendant parfois difficile la libération de l'olive.

Pour éviter cette situation, il est connu de monter la broche librement tournante dans les chapes recevant ses extrémités, de sorte à permettre une rotation de l'ensemble olive et broche en cas de grippage de l'olive sur la broche. Cependant, une telle solution n'est pas satisfaisante en service. En particulier, il est difficile à un opérateur de vérifier si la broche est bloquée ou librement tournante lors d'une opération d'inspection. Par ailleurs, la libre rotation de la broche rend difficile en pratique son utilisation comme canal de graissage de l'olive.

### OBJET DE L'INVENTION

L'invention vise à proposer une olive permettant de diminuer les inconvénients précités.

### PRESENTATION DE L'INVENTION

En vue de la réalisation de ce but, on propose un train d'atterrissage d'aéronef tel que revendiqué en revendication 1, ainsi qu'un procédé de contrôle d'une olive dans un train d'atterrissage d'aéronef tel que revendiqué en revendication 10. Ledit train d'atterrissage comporte notamment une olive destinée à être montée sur un élément mobile pour être crochetée par un crochet de verrouillage en vue de l'immobilisation de l'élément mobile dans une position donnée, l'olive comportant un corps pourvu d'un orifice longitudinal pour son montage sur une broche, et une surface externe de révolution présentant une portion centrale de profil convexe avec laquelle le crochet coopère, caractérisée en ce que la portion centrale de la surface externe est formée sur une bague centrale rapportée à libre rotation sur une portée centrale du corps.

Ainsi, même si le corps de l'olive vient à gripper sur la broche sur laquelle il est enfilé, la bague centrale peut toujours tourner librement sur le corps de sorte à rouler sur le crochet. L'invention autorise donc une double rotation, sans broche librement tournante.

Qui plus est, l'inspection de libre rotation du corps et de la bague centrale est très simple et est adaptée aux contrôles réguliers des visites pré-vols.

Selon un aspect particulier de l'invention, la surface externe de l'olive comporte une première portion latérale formée d'un côté de la bague centrale sur une portion venue de matière avec le corps, et une deuxième portion latérale formée d'un autre côté de la bague centrale sur une bague auxiliaire rapportée à libre rotation sur une portée auxiliaire du corps.

Le cas échéant, la portée centrale et la portée auxiliaire sont formées sur une même surface cylindrique.

Selon une première variante de réalisation, la première portion latérale, la portion centrale et la deuxième portion latérale de la surface externe donnent à celle-ci un profil convexe sans brisure.

Par profil convexe « sans brisure », on entend un profil convexe sensiblement lisse, c'est-à-dire variant de manière continue et relativement progressive, sans marche ou autre rupture du profil.

Selon une deuxième variante de réalisation, les première et deuxième portions latérales de la surface externe s'étendent selon des surfaces cylindriques.

Selon un mode particulier de réalisation, le corps est en acier, tandis que la bague centrale est dans un matériau adapté au frottement et résistant au grippage.

L'invention est également relative à un procédé de montage (non revendiqué) d'une olive selon l'invention, comprenant le montage à libre rotation de l'olive sur la broche de l'élément mobile, la broche étant immobilisée en rotation sur l'élément mobile.

### DESCRIPTION DES FIGURES

L'invention sera mieux comprise à la lumière de la description qui suit d'un mode particulier de réalisation de l'invention, en référence aux figures des dessins annexés, parmi lesquelles :
- la figure 1 est une vue de face d'un élément mobile muni d'une olive selon un premier mode particulier de réalisation de l'invention, en cours d'approche du crochet d'un boîtier de verrouillage, l'un des guides du boîtier de verrouillage ayant été ôté pour plus de clarté ;
- la figure 2 est une vue en coupe longitudinale de l'olive de la figure 1 reçue dans le crochet de boîtier de verrouillage, les jeux ayant été exagérés pour plus de clarté ;
- la figure 3 est une vue analogue à celle de la figure 1, n'illustrant que l'olive proprement dite ;
- la figure 4 est une vue analogue à celle de la figure 3 d'une variante de réalisation de l'olive de l'invention.

### DESCRIPTION DETAILLEE DE L'INVENTION

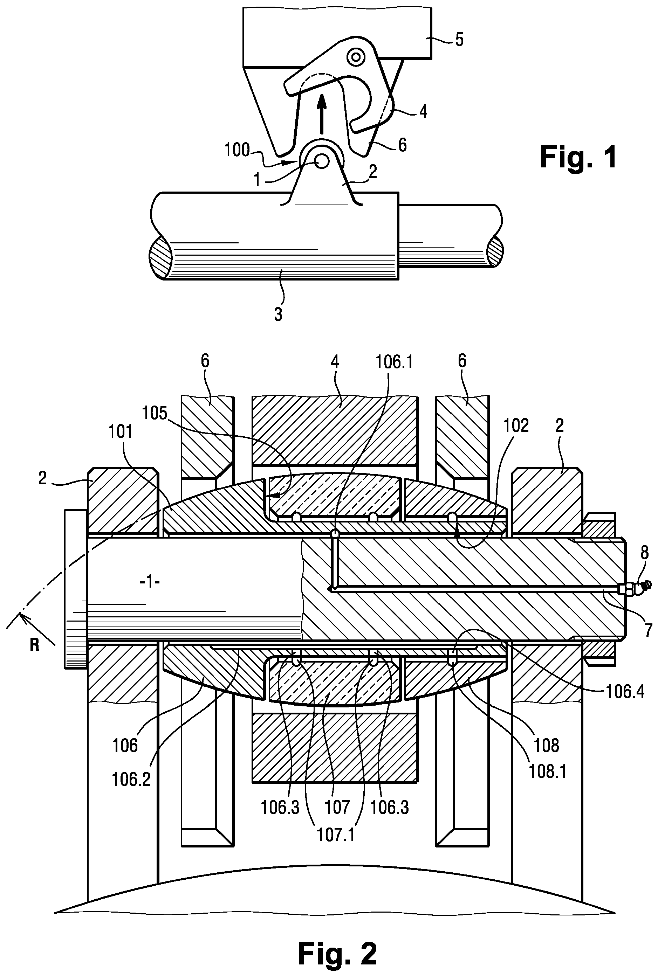

En référence aux figures 1, 2 et 3, l'olive 100 de l'invention est de révolution et comporte un corps 101 comportant un orifice longitudinal cylindrique 120 pour être enfilé sur une broche 1 montée sur deux chapes 2 d'un élément mobile 3, par exemple ici un atterrisseur d'aéronef. L'olive 100 est destinée à être crochetée par un crochet 4 d'un boîtier de verrouillage 5 lorsque l'élément mobile 3 arrive dans une position dans laquelle il doit être immobilisé et verrouillé. A cet effet, le boîtier de verrouillage 5 comporte ici des guides 6 de part et d'autre du crochet 4 pour guider l'olive 100 lors de l'accostage du crochet 4.

Selon l'invention, le corps 101 comporte une surface cylindrique externe 102 définissant successivement une portée centrale 103 et une portée auxiliaire 104. La portée centrale 103 est limitée axialement par un épaulement 105 formé par une face d'une protrusion latérale 106 du corps 101. Sur la portée centrale 103 et la portée auxiliaire 104 sont enfilées une bague centrale 107 et une bague auxiliaire 108 reçues à libre rotation selon un même axe de rotation.

La bague centrale 107 a vocation à venir en contact avec le crochet 4, tandis que la protrusion 106 et la bague auxiliaire 108 ont vocation à venir en contact avec les guides 6. La bague centrale 107 est libre de tourner sur le corps 101 de sorte que si celui-ci vient à gripper sur la broche 1, la bague centrale 107 peut toujours tourner lors de son contact avec le crochet 4. On a ainsi réalisé une redondance de rotation, qui ne nécessite pas que la broche 1 soit montée tournante dans les chapes 2 de l'élément mobile 3, de sorte que la broche 1 peut être montée immobilisée en rotation dans les chapes 2. De même, le montage à rotation de la bague auxiliaire 108 sur le corps 101 permet une rotation relative des surfaces externes de la protrusion 106 et de la bague auxiliaire 108, ce qui facilite le roulement de l'olive 100 le long des guides 6.

Qui plus est, il est facile aux opérateurs de vérifier la libre rotation du corps sur la broche, ainsi que la libre rotation des bagues sur le corps. La procédure de vérification consiste à bloquer la rotation de la bague centrale 107 d'une main et à faire tourner la protrusion 106 et la bague latérale 108 de l'autre main. Cette procédure permet de vérifier tous les chemins de glissement, sans risque d'erreur. La détection de blocages est donc considérablement facilitée.

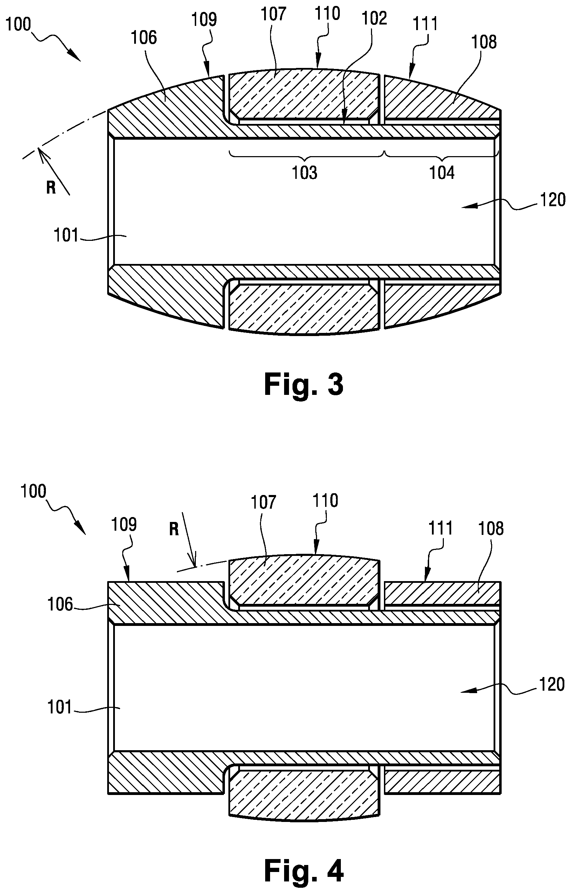

Ici, et selon une première variante de réalisation particulièrement visible à la figure 3, la protrusion latérale 106, la bague centrale 107 et la bague auxiliaire 108 ont des surfaces externes respectives 109, 110, 111 qui définissent chacune des portions (respectivement deux portions latérales encadrant une portion centrale) d'une surface externe de l'olive ayant un profil convexe sans brisure. Sur le mode de réalisation illustré, le profil est en arc de cercle, donc à rayon de courbure R constant, mais tout autre profil convexe sans brisure convient dans le cadre de l'invention.

Selon une variante de réalisation illustrée à la figure 4, la protrusion 106 et la bague auxiliaire 108 ont une surface externe cylindrique, de sorte que seule la surface externe de la bague centrale 107 est bombée. Cette disposition diminue le risque de détérioration des surfaces externes de la protrusion 106 et de la bague auxiliaire 108 par pression de contact excessive contre les guides 6.

La réalisation de l'olive 100 en plusieurs parties permet de choisir des matériaux distincts pour le corps et les bagues. En particulier, on pourra choisir de réaliser le corps en acier et la bague centrale en matériau adapté au frottement et résistant au grippage, par exemple en bronze ou en alliage ferreux. Alternativement, on pourra interposer entre le corps et les bagues des douilles autolubrifiées. On pourra encore pourvoir directement les surfaces de frottement de la broche 1, du corps 101 et des bagues 107 et 108, de revêtements facilitant leur glissement.

Cette réalisation en plusieurs parties permet le cas échéant de ne remplacer que la ou les parties les plus usées, en laissant les autres en service.

La double rotation instaurée selon l'invention entre la broche 1 et le corps 101 de l'olive, et entre le corps 101 de l'olive et la bague centrale 107 permet l'utilisation d'une broche 1 arrêtée en rotation sur les chapes 2. L'immobilisation de la broche 1 permet d'éviter les grands déplacements entre la broche 1 et le diamètre intérieur des chapes 2 qui peuvent engendrer des dégradations des surfaces en contact. Il est dès lors possible de forer dans la broche 1 un canal de graissage 7 débouchant d'une part sensiblement au milieu du corps 1 et d'autre part à une des extrémités de la broche 1 munie d'un graisseur 8. L'immobilisation de la broche 1 permet d'orienter le trou de graissage perpendiculairement à la charge, dans le plan neutre, et ainsi d'augmenter la résistance de la pièce. On notera ainsi que, bien que le tronçon radial du canal de graissage 7 ait été représenté dans le plan de coupe de la figure 2, ce tronçon radial est positionné en pratique pour s'étendre perpendiculairement au plan de coupe de la figure 2. La protrusion 106 est intérieurement pourvue d'une gorge annulaire 106.1, dans laquelle débouche le tronçon radial du canal de graissage 7, et d'une rainure axiale 106.2, aux extrémités fermées, dans laquelle débouchent des conduits radiaux 106.3, 106.4 qui traversent l'épaisseur de la protrusion 106 pour déboucher à l'opposé sur la surface extérieure de la protrusion 106. Les deux canaux 106.3 débouchent en regard d'une gorge annulaire 107.1 ménagée à l'intérieur de la bague 107 et le conduit 106.4 débouche en regard d'une gorge annulaire 108.1 ménagée à l'intérieur de la bague 108. On comprend que :
- le tronçon radial du canal de graissage 7, la gorge annulaire 106.1 et la rainure axiale 106.2 forment des moyens de graissage de l'interface entre la broche 1 et le corps 101 ;
- le tronçon radial du canal de graissage 7, la gorge annulaire 106.1, la rainure axiale 106.2, les conduits radiaux 106.3 et les gorges annulaires 107.1 forment des moyens de graissage de l'interface entre la protrusion 106 et la bague 107 ;
- le tronçon radial du canal de graissage 7, la gorge annulaire 106.1, la rainure axiale 106.2, le conduit radial 106.4 et la gorge annulaire 108.1 forment des moyens de graissage de l'interface entre la protrusion 106 et la bague 108.

L'invention n'est pas limitée à ce qui vient d'être décrit, mais englobe au contraire toute variante entrant dans le cadre défini par les revendications.

En particulier, bien que les olives illustrées ici comportent une portée auxiliaire s'étendant dans le prolongement de la portée centrale pour recevoir une bague auxiliaire, la portée auxiliaire pourra s'étendre selon une autre surface cylindrique que celle de la portée centrale. On pourra même supprimer la portée auxiliaire et la bague auxiliaire, en faisant venir cette dernière de matière avec le corps ou par frettage, de sorte à former une deuxième protrusion. La bague centrale sera alors avantageusement prévue en deux parties pour pouvoir être rapportée sur la portée centrale entre les deux protrusions. Bien entendu, il n'y a dès lors plus de possibilité de rotation relative entre les deux protrusions.

Alternativement, on pourra supprimer la protrusion pour la remplacer sur le corps par une deuxième portée auxiliaire adaptée à recevoir une deuxième bague auxiliaire montée à libre rotation.

Bien que la surface externe des deux portions latérales 109, 111 de part et d'autre de la portion centrale 110 ait été décrite comme s'étendant avec la portion centrale selon un profil convexe sans brisure, il est possible de prévoir un autre profil, variant progressivement ou pas (présence alors d'une brisure comme une marche).

Les guides 6 sont facultatifs.

L'invention concerne tout dispositif aéronautique comprenant un élément fixe sur lequel est monté un élément mobile pourvu d'une olive selon l'invention, un crochet de verrouillage étant relié à l'élément fixe pour crocheter l'olive et retenir l'élément mobile dans une position donnée par rapport à l'élément fixe.

L'invention est par exemple applicable à un train d'atterrissage d'aéronef, comprenant un élément mobile pourvu d'une telle olive. L'élément mobile est par exemple le caisson de l'atterrisseur, le caisson étant articulé à une structure de l'aéronef pour être mobile de façon connue en soi entre une position sortie de la soute de train et une position rentrée dans la soute de train, l'olive étant crochetée par le crochet de verrouillage lorsque le caisson est en position rentrée pour maintenir le caisson dans cette position.

L'élément mobile peut également être une porte de soute d'aéronef ou tout autre élément mobile d'un aéronef. L'invention s'applique également à des domaines autres que celui des véhicules.

## Revendications

1. Train d'atterrissage d'aéronef, comprenant un atterrisseur (3) pourvu d'une chape portant une broche sur laquelle est monté une olive (100) pour être crochetée par un crochet (4) d'un boîtier de verrouillage (5) destiné à être monté sur la structure de l'aéronef en vue de l'immobilisation de l'atterrisseur dans une position donnée par rapport à ladite structure ; l'olive comportant un corps (101) pourvu d'un orifice longitudinal (120) pour son montage sur la broche (1), et une surface externe (109, 110, 111) de révolution présentant une portion centrale (110) de profil convexe pour coopérer avec le crochet, olive dans laquelle la portion centrale (110) de la surface externe est formée sur une bague centrale (107) rapportée à libre rotation sur une portée centrale (103) du corps.

2. Train d'atterrissage selon la revendication 1, dans laquelle la surface externe de révolution de l'olive comporte deux portions latérales (109, 111) de part et d'autre de la portion centrale (110) s'étendant avec la portion centrale selon un profil convexe sans brisure.

3. Train d'atterrissage selon la revendication 2, dans laquelle le profil convexe sans brisure a une courbure constante (R).

4. Train d'atterrissage selon la revendication 1, dans laquelle la surface externe de révolution de l'olive comporte deux portions latérales (109, 111) de part et d'autre de la portion centrale (110), les deux portions latérales (109, 111) s'étendant selon des surfaces cylindriques.

5. Train d'atterrissage selon la revendication 1, sur laquelle le corps porte également une portée auxiliaire (104) sur laquelle une bague auxiliaire (108) est reçue à libre rotation coaxialement à la bague centrale.

6. Train d'atterrissage selon la revendication 5, sur laquelle la portée centrale (103) et la portée auxiliaire (104) sont formées sur une même surface cylindrique externe (102) du corps.

7. Train d'atterrissage selon la revendication 1, dans laquelle le corps (101) est en acier, tandis que la bague centrale est dans un matériau adapté au frottement et résistant au grippage.

8. Train d'atterrissage selon la revendication 1, dans lequel la broche est immobilisée en rotation sur l'atterrisseur.

9. Train d'atterrissage selon la revendication 8, dans lequel la broche (1) est pourvue d'un canal de graissage (7) débouchant sur une extrémité de la broche.

10. Procédé de contrôle d'une olive dans un train d'atterrissage selon l'une des revendications précédentes, comprenant la vérification de la libre rotation des différentes parties de l'olive.

11. Procédé selon la revendication 10, comprenant la vérification de la libre rotation du corps sur la broche, ainsi que la libre rotation de chaque bague sur le corps.

## Patentansprüche

1. Luftfahrzeug-Fahrwerk, umfassend ein Fahrwerk (3), das mit einem Gabelkopf versehen ist, der einen Bolzen trägt, an welchem eine Olive (100) angebracht ist, in die ein Haken (4) eines Verriegelungsgehäuses (5) einhakt, welches dafür bestimmt ist, an der Luftfahrzeugstruktur angebracht zu werden, um das Fahrwerk fest in einer bestimmten Position zu der Struktur zu halten; wobei die Olive einen Körper (101) enthält, der zum Zweck der Montage auf dem Bolzen (1) mit einer Längsöffnung (120) versehen ist und eine äußere Rotationsoberfläche (109, 110, 111) enthält, die einen mit einem konvexen Profil ausgebildeten und mit dem Haken in Wirkverbindung stehenden Mittelabschnitt (110) aufweist und bei welcher der Mittelabschnitt (110) der Außenfläche auf einem Mittelring (107) ausgebildet ist, der frei drehbar auf einer zentralen Ausladung (103) des Körpers angebracht ist.

2. Fahrwerk nach Anspruch 1, wobei die äußere Rotationsoberfläche der Olive zwei Seitenabschnitte (109, 111) enthält, die sich derart auf je einer Seite des Mittelabschnitts (110) erstrecken, dass sie ein konvexes Profil bildend kantenfrei in den Mittelabschnitt übergehen.

3. Fahrwerk nach Anspruch 2, wobei das kantenfreie konvexe Profil eine konstante Krümmung (R) aufweist.

4. Fahrwerk nach Anspruch 1, wobei die äußere Rotationsoberfläche der Olive zwei Seitenabschnitte (109, 111) auf je einer Seite des Mittelabschnitts (110) enthält, wobei sich beide Seitenabschnitte (109, 111) in Form von zylindrischen Oberflächen erstrecken.

5. Fahrwerk nach Anspruch 1, wobei der Körper außerdem eine Zusatz-Ausladung (104) trägt, auf welcher ein Zusatzring (108) koaxial zu dem Mittelring frei drehbar aufgenommen ist.

6. Fahrwerk nach Anspruch 5, wobei die zentrale Ausladung (103) und die Zusatz-Ausladung (104) auf ein und derselben zylindrischen Außenfläche (102) des Körpers ausgebildet sind.

7. Fahrwerk nach Anspruch 1, wobei der Körper (101) aus Stahl besteht, während der Mittelring aus einem gegen Verschleiß durch Reibung und gegen Festfressen beständigen Material besteht.

8. Fahrwerk nach Anspruch 1, wobei der Bolzen drehfest an dem Fahrwerk angebracht ist.

9. Fahrwerk nach Anspruch 8, wobei der Bolzen (1) mit einem Schmierkanal (7) versehen ist, der in ein Ende des Bolzens mündet.

10. Verfahren zur Kontrolle einer Olive in einem Fahrwerk nach einem der vorhergehenden Ansprüche, umfassend die Überprüfung, dass die verschiedenen Teile der Olive frei drehbar sind.

11. Verfahren nach Anspruch 10, umfassend die Überprüfung, dass der Körper auf dem Bolzen frei drehbar ist, sowie dass jeder einzelne Ring auf dem Körper frei drehbar ist.

## Claims

1. Aircraft landing gear, comprising a landing gear (3) provided with a yoke supporting a spindle on which is mounted a capture pin (100) to be hooked by a hook (4) of a locking box (5) intended to be mounted on the structure of the aircraft in order to immobilise the landing gear in a given position with respect to said structure; the capture pin comprising a body (101) provided with a longitudinal opening (120) enabling it to be mounted on the spindle (1), and an outer surface (109, 110, 111) of revolution having a central portion (110) having a convex profile to cooperate with the hook, capture pin wherein the central portion (110) of the outer surface is formed on a central ring (107) which is mounted so as to rotate freely on a central portion (103) of the body.

2. Landing gear according to claim 1, wherein the outer surface of revolution of the capture pin comprises two side portions (109, 111) on either side of the central portion (110) extending with the central portion according to a fracture-free convex profile.

3. Landing gear according to claim 2, wherein the fracture-free convex profile has a constant curvature (R) .

4. Landing gear according to claim 1, wherein the outer surface of revolution of the capture pin comprises two side portions (109, 111) on either side of the central portion (110), the two side portions (109, 111) extending along cylindrical surfaces.

5. Landing gear according to claim 1, wherein the body also supports an auxiliary bearing surface (104) on which an auxiliary ring (108) is received rotating freely, coaxially to the central ring.

6. Landing gear accordng to claim 5, wherein the central bearing surface (103) and the auxiliary bearing surface (104) are formed on one same cylindrical outer surface (102) of the body.

7. Landing gear according to claim 1, wherein the body (101) is made of steel, while the central ring is made of a material adapted to friction and resistant to seizing.

8. Landing gear according to claim 1, in which the spindle is immobilised in rotation on the landing gear.

9. Landing gear according to claim 8, in which the spindle (1) is provided with a lubrication channel (7) opening onto an end of the spindle.

10. Method for controlling a capture pin in a landing gear according to one of the preceding claims, comprising the verification of the free rotation of the different parts of the capture pin.

11. Method according to claim 10, comprising the verification of the free rotation of the body on the spindle, as well as the free rotation of each ring on the body.
